**Europäisches Patentamt**

**European Patent Office**  (11) Numéro de publication: **0 159 930**

**Office européen des brevets**  **B1**

(12) **FASCICULE DE BREVET EUROPÉEN**

(19)

(45) Date de publication du fascicule du brevet:
08.06.88

(51) Int. Cl.⁴: **H 02 K 1/18**

(21) Numéro de dépôt: **85400607.9**

(22) Date de dépôt: **28.03.85**

(54) **Stator pour petits moteurs électriques.**

(30) Priorité: **05.04.84 FR 8405353**

(43) Date de publication de la demande:
**30.10.85 Bulletin 85/44**

(45) Mention de la délivrance du brevet:
**08.06.88 Bulletin 88/23**

(84) Etats contractants désignés:
**BE DE GB IT**

(56) Documents cité:
**WO-A-82/02288**
**FR-A-2 072 540**
**FR-A-2 323 262**

**PATENTS ABSTRACTS OF JAPAN, vol. 5, no. 51 (E-51) 723 , 10 avril 1981, page 123 E 51; & JP - A - 56 3561 (HITACHI EISAKUSHO K.K.) 14-01-1981**

(73) Titulaire: **DUCELLIER ET CIE, 3/5 Voie Félix Eboué, F-94000 Creteil (FR)**

(72) Inventeur: **Dumas, Pierre, 23, les Sarrailleres, F-63570 Brassac les Mines (FR)**
Inventeur: **D'Argouges, Bertrand, 1, rue des Martres, F-43410 Lempdes (FR)**

(74) Mandataire: **Habert, Roger, VALEO Service Propriété Industrielle 21 rue Auguste Blanqui, F-93406 Saint- Ouen (FR)**

EP 0 159 930 B1

## Description

La présente invention concerne un stator pour petits moteurs électriques comportant des aimants permanents maintenus dans une carcasse de circulation de flux.

Afin d'éviter l'emploi de la colle, pour le maintien des aimants permanents dans la carcasse, dans la fabrication en série de tels stators et ainsi de réduire les risques de maladies pouvant être provoquées par les éléments constitutifs de la colle, il est connu de maintenir ces aimants par des moyens mécaniques tels que vis, rivets, enrobage en matière synthétique. Toutes ces dispositions entraînent un prix de revient élevé du stator du fait de l'emploi et de la mise en place de moyens de fixation supplémentaires des aimants sans pour cela que soit toujours assurée leur fixation optimale.

La demande de brevet WO-A-82 02288 propose une solution résolvant partiellement les problèmes évoqués précédemment, en mettant en oeuvre un ressort constitué d'une couronne ondulée, sur la périphérie de laquelle sont obtenus de matière une pluralité de jambages (du même nombre que les aimants à immobiliser) insérés entre chaque aimant, et dont la compression assure l'immobilisation des aimants à l'intérieur de la carcasse. Chaque ondulation de la couronne prend appui sur l'extrémité libre d'un aimant afin d'éviter une translation axiale de ceux-ci.

Si une telle solution à l'avantage de supprimer la colle et l'opération de collage pour le positionnement des aimants, elle n'en demeure pas moins onéreuse par la fabrication d'un tel ressort de conception complexe. De plus, cette solution présente l'inconvénient de nécessiter la présence de moyens d'indexation de l'ensemble ressort-aimants à l'intérieur de la carcasse, lesquels sont constitués de protubérances obtenues de matière avec la carcasse et aptes à se loger dans des évidements correspondants ménagés dans les jambages du ressort.

La demande de brevet FR-A-2 072 540 permet de simplifier, et par conséquent de diminuer le coût d'un tel dispositif en proposant d'immobiliser deux aimants à l'intérieur d'une carcasse en mettant en oeuvre un ressort, constitué d'un fil, lequel agit par compression sur une extrémité de chacun des aimants, tandis que l'autre extrémité de chacun des aimants est arrêtée en prenant appui sur deux languettes ménagées dans la carcasse par emboutissage.

Une telle solution bien que mettant en oeuvre des moyens simples, a cependant l'inconvénient de nécessiter un emboutissage de la carcasse, lequel est apte à déformer ladite carcasse et de plus est de nature à modifier le chemin et la valeur du flux magnétique, ayant un effet appréciable sur le rendement d'un tel moteur.

La présente invention a pour but de remédier à ces inconvénients, et concerne à cet effet un stator pour petit moteur électrique du type comportant deux aimants permanents maintenus dans une carcasse de circulation de flux de section sensiblement circulaire comportant deux méplats diamétralement opposés, les aimants permanents étant maintenus par notamment des moyens élastiques en fil d'acier ressort, caractérisé en ce que les moyens élastiques sont constitués par un simple ressort conformé de manière à constituer deux parties en U, parallèles et symétriques par rapport à l'axe du moteur, parties dont les branches sensiblement parallèles sont reliées respectivement l'une à l'autre, tout ou en partie, par le fil ressort, en formant deux parties cambrées vers l'extérieur, les deux parties en U du ressort étant adaptées à être introduites simultanément entre les deux aimants permanents et sur la face interne des méplats de la carcasse, jusqu'à ce que les parties cambrées formant butées, prennent appui contre les extrémités libres des aimants et agir sur eux par compression.

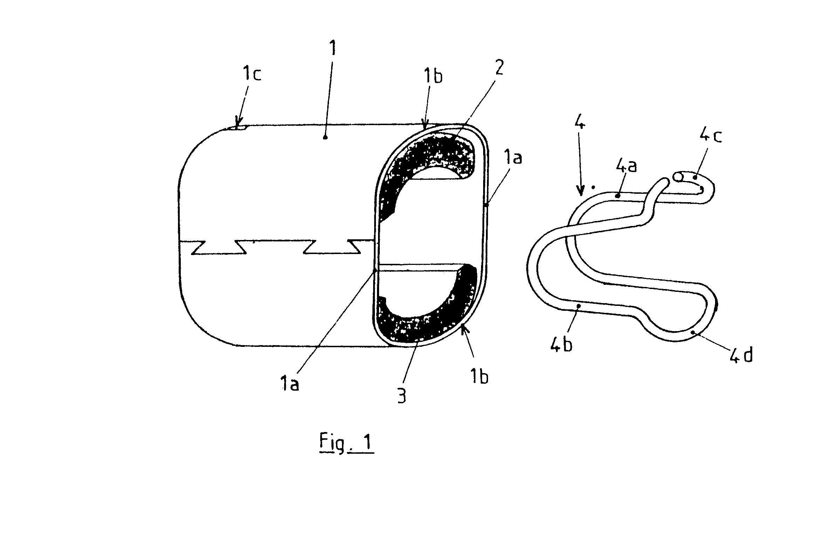

La description qui va suivre en regard de la figure unique annexée fera mieux comprendre comment l'invention peut être réalisée.

Sur cette figure sont représentés deux aimants permanents 2 et 3 logés dans une carcasse 1 de circulation de flux. Cette carcasse de forme cylindrique comporte deux méplats 1a se faisant face qui d'une part réduisent l'encombrement du stator et d'autre part contribuent au positionnement des aimants permanents 2 et 3 logés dans les parties courbes 1b. Le maintien longitudinal des aimants est réalisé par des moyens connus tels que butées sur le palier (non représenté) et pattes 1c rabattues réalisées dans la carcasse.

Conformément à l'invention l'immobilisation des aimants est assurée par un ressort 4 constitué à partir d'un fil en acier ressort.

Ce ressort 4 comporte deux parties en U 4a et 4b, sensiblement parallèles s'évasant vers leurs ouvertures qui sont reliées par des parties 4c et 4d cambrées vers l'extérieur des U, les extrémités libres du fil en acier ressort se trouvant au niveau d'une des parties 4c et 4d.

Un tel ressort permet d'obtenir un gain de temps certain dans l'assemblage du stator; en effet les aimants 2 et 3 étant positionnés dans leur emplacement 1b, chacun en butée contre une languette 1c, il suffit d'exercer une pression sur les parties 4c et 4d du ressort 4, d'enfiler les parties en U 4a et 4b entre les aimants, le long de la carcasse jusqu'à ce que les parties 4c et 4d soient en butée contre l'extrémité libre des aimants 2 et 3, puis de supprimer la pression sur les parties 4c et 4d, l'effet ressort des parties 4a et 4b assurent alors le placage des aimants 2 et 3 contre la carcasse 1.

L'assemblage peut aussi être effectué en positionnant les aimants sur le ressort en appui sur les parties 4a et 4b, et en butée sur les parties 4c et 4d, puis à descendre la carcasse autour de l'ensemble aimants ressorts.

Le diamètre du fil en acier ressort sera alors choisi en fonction de l'importance des vibrations auxquelles le stator sera soumis.

## Revendication

1. Stator pour petit moteur électrique du type comportant deux aimants permanents (2, 3) maintenus dans une carcasse (1) de circulation de flux de section sensiblement circulaire comportant deux méplats (1a) diamétralement opposés, les aimants permanents (2, 3) étant maintenus par notamment des moyens élastiques en fil d'acier ressort, caractérisé en ce que les moyens élastiques sont constitués par un simple ressort (4) conformé de manière à constituer deux parties (4a, 4b) en U, parallèles et symétriques par rapport à l'axe du moteur, parties (4a, 4b) dont les branches sensiblement parallèles sont reliées respectivement l'une à l'autre, tout ou en partie, par le fil ressort, en formant deux parties (4c, 4d) cambrées vers l'extérieur, les deux parties en U (4a, 4b) du ressort (4) étant adaptées à être introduites simultanément entre les deux aimants permanents (2, 3) et sur la face interne des méplats (1a) de la carcasse (1), jusqu'à ce que les parties cambrées (4c, 4d) formant butées, prennent appui contre les extrémités libres des aimants (2, 3) et agir sur eux par compression.

## Patentanspruch

1. Stator für einen kleinen Elektromotor der Bauart mit zwei Dauermagneten (2, 3), die in einem Magnetflußgehäuse (1) von im wesentlichen kreisförmigem Querschnitt gehalten sind, welches zwei einander diametral gegenüberliegende Abflachungen (1a) aufweist, wobei die Dauermagneten (2, 3) insbesondere durch elastische Halterungen aus Federstahldraht gehalten sind, dadurch gekennzeichnet, daß die elastischen Halterungen von einer einfachen Feder (4) gebildet sind, die derart geformt ist, daß sie zwei parallele und in bezug auf die Achse des Motors symmetrische, U-förmige Teile (4a, 4b) bildet, deren im wesentlichen parallele Schenkel ganz oder teilweise durch den Federdraht miteinander verbunden sind und dabei zwei nach außen gebogene Abschnitte (4c, 4d) bilden, wobei die U-förmigen Teile (4a, 4b) der Feder (4) gleichzeitig zwischen die beiden Dauermagneten (2, 3) einführbar und an die Innenseite der Abflachungen (1a) des Gehäuses (1) anlegbar sind, bis die gebogenen Abschnitte (4c, 4d) sich als Anschläge an den freien Enden der Magneten (2, 3) abstützen und auf diese Druck ausüben.

## Claim

1. A stator for a small electric motor of the type comprising two permanent magnets (2, 3) held in a shell (1) with a flux circuit which is substantially circular comprising two diametrically opposite flat sections (1a), the magnets (2, 3) being held in particular by elastic means made of spring steel wire, characterized in that these elastic means consist of a single spring (4) shaped to form two U-shaped parts (4a, 4b) which are parallel and symmetrical with respect to the motor axis, the substantially parallel arms of parts (4a, 4b) being joined respectively to one another, wholly or in part, by the spring wire, to form two parts (4c, 4d) curved towards the outside, and the two U-shaped parts (4a, 4b) of the spring (4) being adapted to be introduced simultaneously between the two permanent magnets (2, 3) and on the internal faces of the flat sections (1a) of the shell (1) until the curved parts (4c, 4d) forming abuttments are applied against the free ends of the magnets (2, 3) and act on them in compression.

1c 1 1b 2

4 4c

4a

1a

1b

1a

1a

3 1b

4b 4d

Fig. 1